# EUROPÄISCHE PATENTSCHRIFT

(11) **EP 1 060 935 B1**
(45) Veröffentlichungstag und Bekanntmachung des Hinweises auf die Patenterteilung: **30.08.2006**
(21) Anmeldenummer: 00109000.0
(22) Anmeldetag: 28.04.2000
(51) Int. Cl.: B60K 15/035, B60K 15/04

(54) **Einrichtung zur Belüftung eines einen Verschlussdeckel aufweisenden Kraftstoffbehälters und Verwendung einer Einrichtung**
Venting device for fuel tank having a closure cap and application of such a device
Dispositif de mise à l'air d'un réservoir de carburant avec bouchon de fermeture et utilisation d'un dispositif

(30) Priorität: 15.06.1999 DE 19927091
(43) Veröffentlichungstag der Anmeldung: 20.12.2000
(73) Patentinhaber: SIEMENS AKTIENGESELLSCHAFT, 80333 München (DE)
(72) Erfinder: Zapp, Thomas, Dr., 44265 Dortmund (DE)

(56) Entgegenhaltungen:
- US-A- 4 162 021
- US-A- 4 716 920

## Beschreibung

Die Erfindung betrifft eine Einrichtung zur Belüftung eines einen Verschlußdeckel aufweisenden Kraftstoffbehälters mit einer in der vorgesehenen aufrechten Lage des Kraftstoffbehälters zum Einströmen von Luft in den Kraftstoffbehälter vorgesehenen Öffnung, und mit einem Schließkörper zum Verschließen der Öffnung bei schräg-oder überkopfliegendem Kraftstoffbehälter, wobei die Öffnung in dem Verschlußdeckel eine bauliche Einheit bildet. Weiterhin betrifft die Erfindung eine vorteilhafte Verwendung einer solchen Einrichtung.

Eine solche Einrichtung ist aus der Praxis als Roll-Over-Ventil bekannt und wird in nahezu jedem heutigen Kraftfahrzeug eingesetzt. Die Einrichtung verhindert bei einem Crash des Kraftfahrzeuges ein Auslaufen von Kraftstoff. Im Normalzustand ermöglicht die Einrichtung, daß verbrauchter Kraftstoff durch ein Nachströmen von Luft ersetzt wird. Damit wird ein Unterdruck in dem Kraftstoffbehälter vermieden. Zur Vermeidung von Kraftstoffemissionen kann außerhalb des Kraftstoffbehälters vor der Öffnung ein Aktivkohlefilter angeordnet sein. Das Roll-Over-Ventil ist meist in einem den Verschlußdeckel tragenden Einfüllstutzen angeordnet.

Nachteilig bei der bekannten Einrichtung ist, daß sie nur sehr aufwendig montiert werden kann, da sich der Einfüllstutzen des im Kraftfahrzeug montierten Kraftstoffbehälters meist in sehr beengten Platzverhältnissen befindet. Weiterhin gestaltet sich ihre Anordnung insbesondere bei flachen Kraftstoffbehältern und solchen, die den Verschlußdeckel unmittelbar auf ihrer Wandung tragen, sehr schwierig.

Aus der US-A-4,716,920, die den Oberbegriff des Anspruchs 1 bildet, ist ein Ventil für einen Verschlußdeckel bekannt geworden, bei dem eine Kugel als Gewicht und als Schließkörper ausgebildet ist. Bei einer Überkopflage des Verschlußdeckels rollt die Kugel auf Rampen und verschließt das Ventil. Hierdurch dichtet das Ventil jedoch erst bei einer vollständigen Überkopflage zuverlässig ab.

Der Erfindung liegt das Problem zugrunde, eine Einrichtung der eingangs genannten Art so zu gestalten, daß sie einfach an beliebigen Kraftstoffbehältern zu montieren ist. Weiterhin soll eine vorteilhafte Verwendung der Einrichtung gefunden werden.

Das erstgenannte Problem wird erfindungsgemäß dadurch gelöst, daß der Schließkörper eine Aufnahme für ein Gewicht bildet, in der ein Gewicht aufgenommen ist oder daß der Verschlußdeckel eine den Schließkörper in Richtung der Öffnung vorspannende Feder aufweist und daß in aufrechter Lage des Kraftstoffbehälters die Gewichtskraft des Schließkörpers größer ist als die Federkraft.

Durch diese Gestaltung läßt sich die erfindungsgemäße Einrichtung an jedem beliebig gestalteten Kraftstoffbehälter einsetzen. Da alle zur Belüftung des Kraftstoffbehälters erforderlichen Bauteile an dem Verschlußdeckel angeordnet sind, wird die erfindungsgemäße Einrichtung bei der Befestigung des Verschlußdeckels auf dem Kraftstoffbehälter montiert. Hierdurch gestaltet sich die Montage der erfindungsgemäßen Einrichtung besonders einfach. Ein weiterer Vorteil dieser Gestaltung besteht darin, daß der Schließkörper in der aufrechten Lage des Kraftstoffbehälters besonders weit von dem im Kraftstoffbehälter befindlichen Kraftstoff entfernt ist. Deshalb gelangt besonders wenig Kraftstoff in den Bereich der Öffnung. Hierdurch wird eine Belastung der Umwelt mit Kraftstoffdämpfen besonders gering gehalten. Die Öffnung wird bei Schräglage des Kraftstoffbehälters besonders zuverlässig verschlossen, wenn der Verschlußdeckel die den Schließkörper in Richtung der Öffnung vorspannende Feder aufweist. In Schräglage hat der Schließkörper jedoch nur eine geringe in Richtung Öffnung wirkende Kraftkomponente, so daß die Feder den Schließkörper gegen die Öffnung bewegt. In Überkopflage addieren sich zudem die Gewichtskraft des Schließkörpers und die Federkraft. Hierdurch hat der Kraftstoffbehälter in Überkopflage eine besonders hohe Sicherheit gegen ein Auslaufen des Kraftstoffs.

Der Schließkörper könnte beispielsweise über ein Scharnier mit dem Verschlußdeckel verbunden sein. Der Schließkörper vermag die Öffnung jedoch gemäß einer vorteilhaften Weiterbildung der Erfindung bei beliebigen Schräglagen des Kraftstoffbehälters gleichermaßen zuverlässig zu verschließen, wenn der Verschlußdeckel einen Käfig zur Führung des Schließkörpers aufweist.

Zur weiteren Erhöhung der Sicherheit gegen ein Auslaufen des Kraftstoffs aus dem Kraftstoffbehälter trägt es gemäß einer anderen vorteilhaften Weiterbildung der Erfindung bei, wenn der Schließkörper kegelstumpfförmig und die Öffnung der Form des Schließkörpers entsprechend verjüngend gestaltet ist.

Eine Zerstörung des Kraftstoffbehälters oder des Verschlußdeckels bei verschlossener Öffnung und einem gleichzeitigen Ausdehnen des Kraftstoffs läßt sich durch ein zum Ablassen eines Überdrucks im Kraftstoffbehälter gestaltetes Sicherheitsventil einfach vermeiden. Dieses Sicherheitsventil ermöglicht ein kontrolliertes Entweichen einer meist geringen Menge an Kraftstoff oder an Kraftstoffdämpfen bei einer Erwärmung des Kraftstoffbehälters und von dem Schließkörper verschlossenen Öffnung.

Der Verschlußdeckel gestaltet sich gemäß einer anderen vorteilhaften Weiterbildung der Erfindung konstruktiv besonders einfach, wenn das Sicherheitsventil neben dem Schließkörper in dem Verschlußdeckel angeordnet ist.

Das Sicherheitsventil benötigt gemäß einer anderen vorteilhaften Weiterbildung der Erfindung besonders wenig Bauraum in dem Verschlußdeckel, wenn das Sicherheitsventil mit dem Schließkörper eine bauliche Einheit bildet und wenn der Schließkörper und das Sicherheitsventil eine gemeinsame Öffnung in dem Verschlußdeckel aufweisen. Ein weiterer Vorteil dieser Gestaltung ist, daß der Kraftstoffbehälter im Normalbetrieb besonders wenig Kraftstoffdämpfe emittiert.

Zur weiteren konstruktiven Vereinfachung der erfindungsgemäßen Einrichtung trägt es bei, wenn das Sicherheitsventil als mit einer Feder in Schließstellung vorgespanntes Pilzventil ausgebildet ist.

Das zweitgenannte Problem, nämlich die Schaffung einer vorteilhaften Verwendung der Einrichtung, wird erfindungsgemäß bei einer Belüftung eines Kraftstoffbehälters für ein Kraftrad erreicht.

Durch die erfindungsgemäße Anordnung des Schließkörpers in dem Verschlußdeckel des Kraftstoffbehälters des Kraftrades wird eine Öffnung in der Wandung des meist aus Stahlblech gefertigten Kraftstoffbehälters vermieden. Dies führt zu einer besonders starken Vereinfachung der Montage der Einrichtung, da Kraftstoffbehälter für Krafträder keinen oder einen nur sehr kurzen Einfüllstutzen aufweisen. Bei als Motorrollern ausgebildeten Krafträdern ist der Kraftstoffbehälter zudem sehr niedrig gestaltet, so daß eine Benetzung der Öffnung dank der Erfindung weitgehend vermieden wird. Im Normalbetrieb des Kraftrades entweichen daher besonders wenig Kraftstoffdämpfe aus dem Kraftstoffbehälter.

Die Erfindung läßt zahlreiche Ausführungsformen zu. Zur weiteren Verdeutlichung ihres Grundprinzips sind drei davon in der Zeichnung dargestellt und werden nachfolgend beschrieben. Diese zeigt in
- Fig.1: schematisch einen Teilbereich eines Kraftstoffbehälters mit einem Verschlußdeckel und mit einer erfindungsgemäßen Einrichtung zur Belüftung,
- Fig.2: eine weitere Ausführungsform der erfindungsgemäßen Belüftung,
- Fig.3: eine erfindungsgemäße Belüftung mit separatem Überdruckventil.

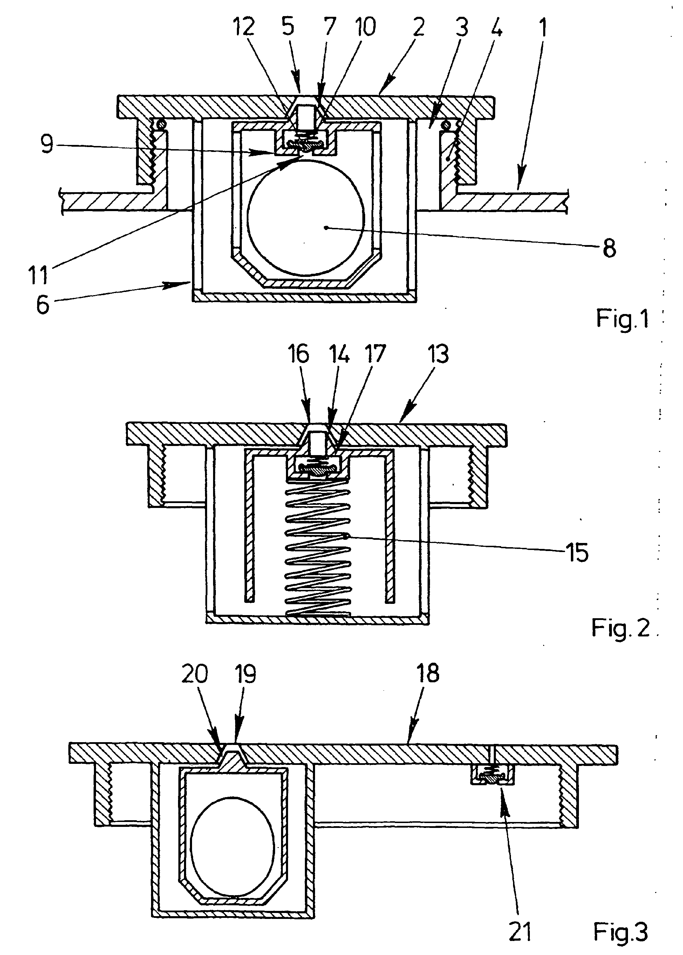

Figur 1 zeigt einen Kraftstoffbehälter 1 für ein Kraftfahrzeug mit einer von einem Verschlußdeckel 2 verdeckten Einfüllöffnung 3 für Kraftstoff. Der Kraftstoffbehälter 1 hat im Bereich der Einfüllöffnung 3 einen Anschlußstutzen 4 und kann insbesondere für den Einsatz an einem Motorroller vorgesehen sein. Solche Kraftstoffbehälter 1 haben meist einen besonders kurzen Anschlußstutzen 4. Der Verschlußdeckel 2 hat eine Öffnung 5 zur Belüftung des Kraftstoffbehälters 1. Durch die Öffnung 5 kann in der eingezeichneten aufrechten Stellung des Kraftstoffbehälters 1 Luft in diesen eindringen und den verbrauchten Kraftstoff ersetzen. Der Verschlußdeckel 2 hat einen Käfig 6 als Führung für einen der Öffnung 5 gegenüberstehenden Schließkörper 7. Die Öffnung 5 und der Schließkörper 7 sind einander entsprechend kegelstumpfförmig gestaltet. Der Schließkörper 7 ist mit einem kugelförmigen Gewicht 8 verbunden. Bei einer Überkopflage des Kraftfahrzeuges wird der Schließkörper 7 von der Schwerkraft gegen die Öffnung 5 gedrückt und verschließt diese. Ein Überdruck in dem Kraftstoffbehälter 1 kann anschließend über ein Sicherheitsventil 9 entweichen. Das Sicherheitsventil 9 hat ein pilzförmiges, von einer Feder 10 gegen eine Öffnung 11 vorgespanntes Schließteil 12 und bildet mit dem Schließkörper eine bauliche Einheit.

Figur 2 zeigt einen zum Aufschrauben auf den in Figur 1 dargestellten Anschlußstutzen 4 vorgesehenen Verschlußdeckel 13. Dieser Verschlußdeckel 13 unterscheidet sich von dem aus Figur 1 darin, daß zur Vorspannung eines Schließkörpers 14 eine Feder 15 vorgesehen ist. Die Federkraft der Feder 15 ist in der eingezeichneten Normalstellung geringer als die Gewichtskraft des Schließkörpers 14. Hierdurch wird eine Öffnung 16 in dem Verschlußdeckel 13 in der eingezeichneten Stellung freigegeben, so daß Luft in den Kraftstoffbehälter eindringen kann. Mit zunehmender Schräglage des Kraftfahrzeuges verringert sich die von der Öffnung 16 weggerichtete Komponente der Gewichtskraft des Schließkörpers 14, so daß die Feder 15 den Schließkörper 14 gegen die Öffnung 16 bewegen kann. Bei starker Schräglage oder bei einer Überkopflage des Kraftfahrzeuges wird die Öffnung 16 zuverlässig verschlossen. In dem Schließkörper 14 ist ein Sicherheitsventil 17 zum Ablassen eines Überdrucks aus dem Kraftstoffbehälter angeordnet.

Figur 3 zeigt einen Verschlußdeckel 18, bei dem ein zur Belüftung des in Figur 1 dargestellten Kraftstoffbehälters 1 vorgesehener, gegen eine Öffnung 19 bewegbarer Schließkörper 20 neben einem Sicherheitsventil 21 angeordnet ist. Das Sicherheitsventil 21 und der Schließkörper 20 sind ansonsten wie in Figur 1 beschrieben aufgebaut.

## Patentansprüche

1. Einrichtung zur Belüftung eines einen Verschlußdeckel aufweisenden Kraftstoffbehälters mit einer in der vorgesehenen aufrechten Lage des Kraftstoffbehälters zum Einströmen von Luft in den Kraftstoffbehälter vorgesehenen Öffnung, und mit einem Schließkörper zum Verschließen der Öffnung bei schräg- oder überkopfliegendem Kraftstoffbehälter, wobei die Öffnung in dem Verschlußdeckel angeordnet ist und der Schließkörper mit dem Verschlußdeckel eine bauliche Einheit bildet, **dadurch gekennzeichnet, daß** der Schließkörper (7, 20) eine Aufnahme für ein Gewicht bildet, in der ein Gewicht (8) aufgenommen ist oder dass der Verschlußdeckel (13) eine den Schließkörper (14) in Richtung der Öffnung (16) vorspannende Feder (15) aufweist und daß in aufrechter Lage des Kraftstoffbehälters (1) die Gewichtskraft des Schließkörpers (14) größer ist als die Federkraft.

2. Einrichtung nach Anspruch 1, **dadurch gekennzeichnet, daß** der Verschlußdeckel (2, 13, 18) einen Käfig (6) zur Führung des Schließkörpers (7, 14, 20) aufweist.

3. Einrichtung nach Anspruch 1 oder 2, **dadurch gekennzeichnet, daß** der Schließkörper (7, 14, 20) kegelstumpfförmig und die Öffnung (5, 16, 19) der Form des Schließkörpers (7, 14, 20) entsprechend verjüngend gestaltet ist.

4. Einrichtung nach zumindest einem der vorhergehenden Ansprüche, **gekennzeichnet durch** ein zum Ablassen eines Überdrucks aus dem Kraftstoffbehälter (1) gestaltetes Sicherheitsventil (9, 17, 21).

5. Einrichtung nach zumindest einem der vorhergehenden Ansprüche, **dadurch gekennzeichnet, daß** das Sicherheitsventil (21) neben dem Schließkörper (20) in dem Verschlußdeckel (18) angeordnet ist.

6. Einrichtung nach zumindest einem der vorhergehenden Ansprüche, **dadurch gekennzeichnet, daß** das Sicherheitsventil (9, 17) mit dem Schließkörper (7, 14) eine bauliche Einheit bildet und daß der Schließkörper (7, 14) und das Sicherheitsventil (9, 17) eine gemeinsame Öffnung (5, 16) aufweisen.

7. Einrichtung nach zumindest einem der vorhergehenden Ansprüche, **dadurch gekennzeichnet, daß** das Sicherheitsventil (9, 17, 21) als mit einer Feder (10) in Schließstellung vorgespanntes Pilzventil ausgebildet ist.

8. Verwendung einer Einrichtung nach einem der vorhergehenden Ansprüche zur Belüftung eines Kraftstoffbehälters eines Kraftrades.

## Claims

1. Device for admitting air to a fuel tank having a closure cap, with an opening intended for air to flow into the fuel tank in the intended upright position of said fuel tank, and with a closing element for closing the opening when said fuel tank is tilted or inverted, the opening being arranged in the closure cap and the closing element forming a structural unit with the closure cap, **characterized in that** the closing element (7, 20) forms a receptacle for a weight in which a weight (8) is accommodated or **in that** the closure cap (13) has a spring (15) prestressing the closing element (14) in the direction of the opening (16) and **in that**, in the upright position of the fuel tank (1), the force of the weight of the closing element (14) is greater than the spring force.

2. Device according to Claim 1, **characterized in that** the closure cap (2, 13, 18) has a cage (6) for guiding the closing element (7, 14, 20).

3. Device according to Claim 1 or 2, **characterized in that** the closing element (7, 14, 20) is of a frustoconical design and the opening (5, 16, 19) is of a tapered design, corresponding to the shape of the closing element (7, 14, 20).

4. Device according to at least one of the preceding claims, which comprises a safety valve (9, 17, 21) designed for letting off excess pressure from the fuel tank (1).

5. Device according to at least one of the preceding claims, **characterized in that** the safety valve (21) is arranged next to the closing element (20) in the closure cap (18).

6. Device according to at least one of the preceding claims, **characterized in that** the safety valve (9, 17) forms a structural unit with the closing element (7, 14) and **in that** the closing element (7, 14) and the safety valve (9, 17) have a common opening (5, 16).

7. Device according to at least one of the preceding claims, **characterized in that** the safety valve (9, 17, 21) is designed as a mushroom valve prestressed with a spring (10) in the closed position.

8. The use of a device according to at least one of the preceding claims for admitting air to a fuel tank of a motorcycle.

## Revendications

1. Dispositif destiné à l'aération d'un réservoir à carburant doté d'un bouchon de fermeture, comportant une ouverture prévue pour l'entrée d'air dans le réservoir à carburant, lorsque le réservoir à carburant est dans la position droite prévue, et un corps d'obturation obturant l'ouverture, lorsque le réservoir à carburant est dans une position oblique ou la tête en bas, l'ouverture étant placée dans le bouchon de fermeture et le corps d'obturation formant une unité constructive avec le bouchon de fermeture, **caractérisé par le fait que** le corps d'obturation (7, 20) forme un logement pour un poids, dans lequel est logé un poids (8), ou que le bouchon de fermeture (13) comporte un ressort (15) soumettant le corps d'obturation (14) à une précontrainte dans la direction de l'ouverture (16) et que, dans la position droite du réservoir à carburant (1), la force de pesanteur du corps d'obturation (14) est supérieure à la force du ressort.

2. Dispositif selon la revendication 1, **caractérisé par le fait que** le bouchon de fermeture (2, 13, 18) comporte une cage (6) pour le guidage du corps d'obturation (7, 14, 20).

3. Dispositif selon la revendication 1 ou 2, **caractérisé par le fait que** le corps d'obturation (7, 14, 20) est en forme de tronc de cône et que l'ouverture (5, 16, 19) a la forme du corps d'obturation (7, 14, 20) en se rétrécissant d'une façon correspondante.

4. Dispositif selon au moins l'une des revendications précédentes, **caractérisé par** une soupape de sécurité (9, 17, 21) conçue pour permettre à une surpression du réservoir à carburant (1) de s'échapper.

5. Dispositif selon au moins l'une des revendications précédentes, **caractérisé par le fait que** la soupape de sécurité (21) est disposée dans le bouchon de fermeture (18) près du corps d'obturation (20).

6. Dispositif selon au moins l'une des revendications précédentes, **caractérisé par le fait que** la soupape de sécurité (9, 17) forme une unité constructive avec le corps d'obturation (7, 14) et que le corps d'obturation (7, 14) et la soupape de sécurité (9, 17) ont une ouverture commune (5, 16).

7. Dispositif selon au moins l'une des revendications précédentes, **caractérisé par le fait que** la soupape de sécurité (9, 17, 21) est conçue comme soupape à champignon soumise, en position fermée, à une précontrainte par un ressort (10).

8. Utilisation d'un dispositif selon l'une des revendications précédentes destiné à l'aération d'un réservoir à carburant d'un motocycle.
